# EUROPEAN PATENT APPLICATION

(11) **EP 2 187 610 A1**
(43) Date of publication of application: **19.05.2010**
(21) Application number: 08846071.2
(22) Date of filing: 24.10.2008
(51) Int. Cl.: H04M 3/493

(54) **METHOD OF ISSUING USER SERVICE CAPABILITY AND PRESENT SERVER AND COMMUNICATION SERVICE SYSTEM**

(30) Priority: 26.10.2007 CN 200710165509
(71) Applicant: Huawei Technologies Co., Ltd., Longgang District, Shenzhen Guangdong 518129 (CN)
(72) Inventor: ZHANG, Wangguang, Shenzhen 518129 (CN)
(74) Representative: Kreuz, Georg Maria
(86) International application number: PCT/CN2008/072809
(87) International publication number: WO 2009/056057

(57) **Abstract**

A method for issuing user service capabilities and corresponding presence server (PS) and communication service system are provided. The PS collects service subscription information indicative of service capabilities of users, and notifies a user of service subscription information of a contact concerning the user according to the user's request. The provided technical solution enables the user to select an appropriate communication mode to interact with the contact according to service capabilities of the contact.

## Description

### CROSS-REFERENCE TO RELATED APPLICATION

The application claims the benefit of priority to China Patent Application No. 200710165509.1, entitled "METHOD FOR ISSUING USER SERVICE CAPABILITIES, PRESENCE SERVER, AND COMMUNICATION SERVICE SYSTEM ", filed on October 26, 2007, which is incorporated herein by reference in its entirety.

### FIELD OF THE TECHNOLOGY

The present invention relates to the field of communication technology, and more particularly to a method for issuing user service capabilities, a presence server (PS), and a communication service system.

### BACKGROUND OF THE INVENTION

Presence service is a communication service for collecting and issuing presence information. The presence information includes client device availability (for example, on/off information or in a call state), a user state (for example, idle, non-idle, or in a conference), location information, client device capabilities (for example, support for voice, text, and multimedia transmission), and retrievable user information (for example, mood and hobbies of a user). A server providing the presence service is referred to as a presence server (PS). A user may acquire presence information of other users through the presence service provided by the PS, so as to select an appropriate time to communicate with a desired contact.
In the process of researching and practicing current presence services, it is detected that, when a user intends to interact with a contact using a certain communication mode, the user cannot know whether the other party has corresponding service capabilities, and as a result, the user cannot select an appropriate communication mode to communicate with the contact. For example, when a user A that has subscribed to an instant messaging (IM) service intends to send an IM message to a user B, if the user B has not subscribed to the IM service, the IM message sent by the user A will not be delivered to the user B, and the communication fails.

### SUMMARY OF THE INVENTION

Accordingly, the present invention is directed to a method for issuing user service capabilities, a PS, and a communication service system, which can enable a user to select an appropriate communication mode to communicate with a contact.
A method for issuing user service capabilities is provided, which includes: acquiring service subscription information associated with users; and notifying a first user of service subscription information associated with a requested second user according to a subscription request of the first user.
A PS is provided, which includes: a subscription relationship processing module, adapted to acquire service subscription information associated with users; and a service capability message assembly module, adapted to notify a first user of service subscription information associated with a requested second user based on the service subscription information associated with the usersthat is acquired by the subscription relationship processing module according to a subscription request of the first user.
A communication service system is provided, which includes: a service data management system, adapted to store service subscription information of users, and provide an interface for synchronizing the service subscription information of the users; and a PS, adapted to perform a data synchronization with the service data management system so as to obtain service subscription information associated with the users, acquire a subscription request of a first user that carries an identification of a second user, search the acquired service subscription information associated with the users for service subscription information associated with the second user, and generate a notification message carrying the service subscription information associated with the second user and send the notification message to the first user.
A communication service system is provided, which includes: a service data management system, adapted to store service subscription information of users, and provide service subscription information associated with the users that are queried according to query requests; and a PS, adapted to acquire a subscription request of a first user that carries an identification of a second user, query service subscription information associated with the second user from the service data management system and obtain the service subscription information associated with the second user that is returned by the service data management system, and generate a notification message carrying the service subscription information associated with the second user and send the notification message to the first user.
In an embodiment, the present invention further provides a computer program product, which includes computer program codes such that when the computer program codes are executed by a computer, the computer program codes enable the computer to perform any step of the method for issuing user service capabilities.
In an embodiment, the present invention further provides a computer readable storage medium, which stores computer program codes such that when the computer program codes are executed by a computer, the computer program codes enable the computer to perform any step of the method for issuing user service capabilities.
In the technical solution of the present invention, the PS collects service subscription information indicative of service capabilities of users, and notifies a user of service subscription information of a contact concerning the user according to the user's request, so as to enable the user to conveniently select an appropriate communication mode to interact with the contact according to service capabilities of the contact.

### BRIEF DESCRIPTION OF THE DRAWINGS

FIG. 1 is a schematic view of main steps of a method for issuing user service capabilities according to the present invention;
FIG. 2 is a schematic view of a basic logical structure of a PS according to the present invention;
FIG. 3 is a schematic flow chart of a method for issuing user service capabilities according to a specific embodiment of the present invention;
FIG. 4 is a schematic view of a logical structure of a communication service system corresponding to the method shown in FIG. 3;
FIG. 5 is a schematic flow chart of a method for issuing user service capabilities according to another specific embodiment of the present invention; and
FIG. 6 is a schematic view of a logical structure of a communication service system corresponding to the method shown in FIG. 5.

### DETAILED DESCRIPTION OF THE EMBODIMENTS

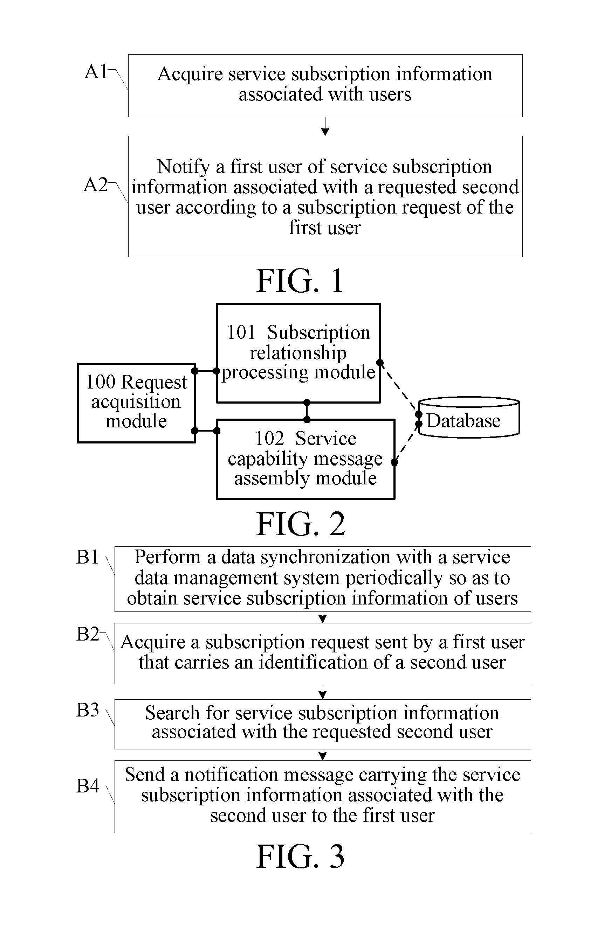

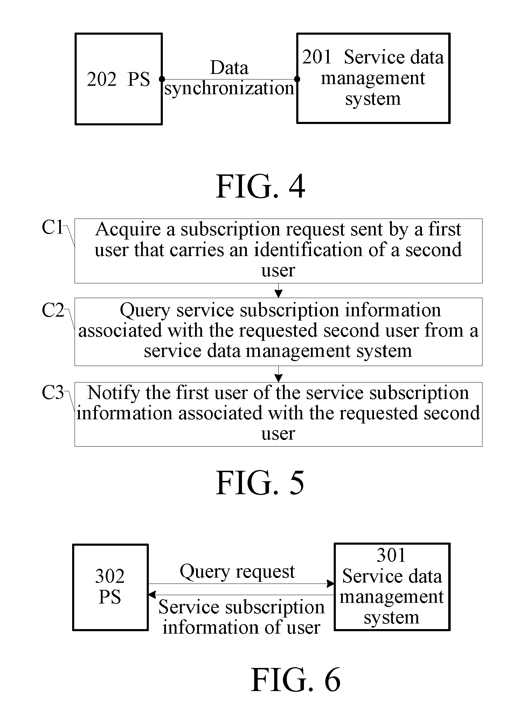

Referring to FIG. 1, a method for issuing user service capabilities according to the present invention mainly includes the following steps.
In Step A1, service subscription information associated with users is acquired.
Service subscription information of a user may be acquired in various manners. For example, service subscription information of a user may be obtained from an application providing services through a service portal when the user subscribes to the services; service subscription information of a user may also be obtained by actively performing a data synchronization with a service data management system periodically; service subscription information of a user may also be obtained when the service data management system initiates the data synchronization due to the change of service subscription information of the user; or service subscription information of a requested user may also be acquired in real time according to a subscription request of a user.
The service data management system herein refers to a system storing service subscription information of users, and may be embodied in different forms in different specific network architectures and service operation modes. The service data management system may be a data center storing subscription relationship data, for example, a home subscriber server (HSS), a mobile data service platform (MDSP), or a business operation support system (BOSS); or a service operation and maintenance platform for providing and managing various services.
If the service subscription information of the users is not acquired in real time, the acquired service subscription information of the users may be stored in a local database or a dedicated file server. During data storage, subscription information of different services associated with the same user may be combined, organized, and stored together; alternatively, the service subscription information may also be stored separately according to corresponding relationships between the users and services, as long as query based on user identifications can be provided. The specific data form is not limited in the present invention.
In Step A2, a first user is notified of service subscription information associated with a requested second user according to a subscription request of the first user.
Service subscription information of a requested user may be provided to a user based on the request and issuing of presence information. After the user's request is received, subscription relationship data of the requested user is obtained by searching the database or querying the service data management system in real time, and then assembled into a message that can be processed by the user, and the message is delivered to the requesting user.
An appropriate notification mechanism may be employed according to application requirements. For example, notification may be performed once only after the user's request is received; alternatively, the user's request may be regarded as valid for a period of time, and if the service subscription relationship of the requested user is changed within the period of time, the requesting user is again notified of the changed service subscription relationship.
Referring to FIG. 2, a basic structure of a PS adapted to perform the method for issuing user service capabilities according to the present invention includes a request acquisition module 100, a subscription relationship processing module 101, and a service capability message assembly module 102.
The request acquisition module 100 is adapted to acquire a subscription request of a first user that carries an identification of a second user.
The subscription relationship processing module 101 is adapted to acquire service subscription information associated with users.
If the service subscription information of the requested user is acquired in real time, the subscription relationship processing module 101 may specifically obtain the service subscription information associated with the requested user by querying a service data management system storing service subscription information of users in real time according to the subscription request sent by the requesting user that is acquired by the request acquisition module 100.
If the service subscription information of the requested user is not acquired in real time, service subscription information of various users that is synchronously obtained by the subscription relationship processing module 101 from the service data management system may be stored in a local database or a dedicated file server. In FIG. 2, the component for storage is represented by a "database", and the connection relationship between the subscription relationship processing module 101 and the "database" is represented by a dashed line.
The service capability message assembly module 102 is adapted to notify the first user sending the request of service subscription information associated with the requested second user based on the service subscription information associated with the users that is acquired by the subscription relationship processing module 101 according to the subscription request of the first user.
If the service subscription information of the requested user is acquired in real time, the service capability message assembly module 102 may directly obtain the service subscription information associated with the requested user from the subscription relationship processing module 101. In FIG. 2, the connection relationship between the service capability message assembly module 102 and the subscription relationship processing module 101 is represented by a solid line.
If the service subscription information of the requested user is not acquired in real time, the service capability message assembly module 102 may obtain the service subscription information associated with the requested user by searching the "database". In FIG. 2, the connection relationship between the service capability message assembly module 102 and the "database" is represented by a dashed line.
The method and the system of the present invention are described in detail below through specific embodiments.
Referring to FIG. 3, in a specific embodiment, the present invention provides a method for issuing user service capabilities, which includes the following steps.
In Step B1, a data synchronization is performed with a service data management system storing service subscription information of users periodically so as to obtain service subscription information associated with the users.
The periodical data synchronization in this embodiment may be determined according to service requirements and network conditions. For example, the data synchronization may be performed using idle time of the system or network, so as to reduce the burden on the system and network.
In Step B2, a subscription request of a first user that carries an identification of a second user is acquired.
The subscription request sent by the user may employ an existing subscription message mode by indicating in a subscription message that the message is a request for service capabilities of the requested user. Definitely, a new message may also be designed to transfer a subscription request for service capabilities of a user.
In Step B3, the acquired service subscription information associated with the users is searched for service subscription information associated with the requested second user.
Base on the storage mode of the service subscription information, the search may be performed in a local database or a dedicated file server.
In Step B4, a notification message carrying the service subscription information associated with the second user is generated and sent to the first user.
Similar to the transfer of the subscription request, the notification message may also employ an existing message mode or be redesigned.
Moreover, in Step B1, in addition to the periodical synchronization, the synchronization may also be initiated by the service data management system after service subscription information of a user is changed. For example, if the service data management system is a service operation and maintenance platform for providing and managing various services, when a user subscribes or unsubscribes to a certain service from the service operation and maintenance platform, the service operation and maintenance platform may synchronize the changed subscription relationship data of the user to a PS through an interface with the PS. The synchronized data may include only the changed content portion or all contents associated with the user.
Referring to FIG. 4, a logical structure of a communication service system corresponding to the method shown in FIG. 3 includes a service data management system 201 and a PS 202.
The service data management system 201 is adapted to store service subscription information of users and provide an interface for synchronizing the stored service subscription information of the users.
The PS 202 is adapted to perform a data synchronization with the service data management system 201 so as to obtain service subscription information associated with the users, acquire a subscription request of a first user that carries an identification of a second user, search the acquired service subscription information associated with the users for service subscription information associated with the requested second user, and generate a notification message carrying the service subscription information associated with the second user and send the notification message to the first user.
Based on different data synchronization modes, the data synchronization may be performed by the PS 202 with the service data management system 201 periodically; alternatively, the data synchronization may also be initiated by the service data management system 201 with the PS 202 after the service subscription information of the users is changed.
Referring to FIG. 5, in another specific embodiment, the present invention provides a method for issuing user service capabilities. The difference between the method and the method shown in FIG. 3 lies in that, subscription relationship data of a requested user is acquired in real time according to a user's request. The method includes the following steps.
In Step C1, a subscription request of a first user that carries an identification of a second user is acquired.
In Step C2, service subscription information associated with the requested second user is queried from a service data management system storing service subscription information of users, and the service subscription information associated with the second user that is returned by the service data management system is obtained.
In Step C3, the first user is notified of the service subscription information associated with the requested second user according to the subscription request of the first user.
Through the real-time query of the subscription relationship data in this embodiment, repeated storage of subscription relationship data of all users can be avoided, thereby saving storage resources.
Referring to FIG. 6, a logical structure of a communication service system corresponding to the method shown in FIG. 5 includes a service data management system 301 and a PS 302.
The service data management system 301 is adapted to store service subscription information of users, and provide service subscription information associated with the users that are queried according to query requests.
The PS 302 is adapted to acquire a subscription request of a first user that carries an identification of a second user, query service subscription information associated with the requested second user from the service data management system 301 and obtain the service subscription information associated with the second user that is returned by the service data management system 301, and generate a notification message carrying the service subscription information associated with the second user and send the notification message to the first user.
In the technical solution of the present invention, the PS collects service subscription information indicative of service capabilities of users, and notifies a user of service subscription information of a contact concerning the user according to the user's request, so as to enable the user to conveniently select an appropriate communication mode to interact with the contact according to service capabilities of the contact.
In an embodiment, the present invention further provides a computer program product, which includes computer program codes such that when the computer program codes are executed by a computer, the computer program codes enable the computer to perform any step of the method for issuing user service capabilities shown in FIG. 3 or 5.
In an embodiment, the present invention further provides a computer readable storage medium, which stores computer program codes such that, when the computer program codes are executed by a computer, the computer program codes enable the computer to perform any step of the method for issuing user service capabilities shown in FIG. 3 or 5.
The method for issuing user service capabilities, the PS, and the communication service system of the present invention are described in detail above. The principle and implementation of the present invention are described herein through specific examples. The description about the embodiments of the present invention is merely provided for ease of understanding of the method and core ideas of the present invention. Persons of ordinary skill in the art can make variations and modifications to the present invention in terms of the specific implementations and application scopes according to the ideas of the present invention. Therefore, the specification shall not be construed as limitations to the present invention.

## Claims

1. A method for issuing user service capabilities, comprising:
acquiring service subscription information associated with users; and
notifying a first user of service subscription information associated with a requested second user according to a subscription request of the first user.

2. The method for issuing user service capabilities according to claim 1, wherein the acquiring the service subscription information associated with the users comprises:
performing a data synchronization with a service data management system storing service subscription information of users so as to obtain the service subscription information associated with the users.

3. The method for issuing user service capabilities according to claim 2, wherein the data synchronization is performed periodically or initiated by the service data management system after the service subscription information of the users is changed.

4. The method for issuing user service capabilities according to claim 2 or 3, wherein the subscription request of the first user carries an identification of the second user, and the notifying the first user of the service subscription information associated with the second user comprises:
searching the acquired service subscription information associated with the users for the service subscription information associated with the second user; and
generating a notification message carrying the service subscription information associated with the second user and sending the notification message to the first user.

5. The method for issuing user service capabilities according to claim 1, further comprising: acquiring the subscription request of the first user that carries an identification of the second user,
wherein the acquiring the service subscription information associated with the users comprises: querying the service subscription information associated with the second user from a service data management system storing service subscription information of users, and obtaining the service subscription information associated with the second user that is returned by the service data management system.

6. A presence server, PS, comprising:
a subscription relationship processing module, adapted to acquire service subscription information associated with users; and
a service capability message assembly module, adapted to notify a first user of service subscription information associated with a requested second user based on the service subscription information associated with the users, wherein the service subscription information is acquired by the subscription relationship processing module according to a subscription request of the first user.

7. The PS according to claim 6, further comprising:
a request acquisition module, adapted to acquire the subscription request of the first user that carries an identification of the second user,
wherein the subscription relationship processing module is further adapted to query the service subscription information associated with the second user from a service data management system storing service subscription information of users according to the identification of the second user carried in the subscription request, and obtain the service subscription information associated with the second user that is returned by the service data management system.

8. A communication service system, comprising:
a service data management system, adapted to store service subscription information of users, and provide an interface for synchronizing the service subscription information of the users; and
a presence server, PS, adapted to perform a data synchronization with the service data management system so as to obtain service subscription information associated with the users, acquire a subscription request of a first user that carries an identification of a second user, search the acquired service subscription information associated with the users for service subscription information associated with the second user, and generate a notification message carrying the service subscription information associated with the second user and send the notification message to the first user.

9. The communication service system according to claim 8, wherein
the PS performs the data synchronization with the service data management system periodically; or
the service data management system initiates the data synchronization with the PS after the service subscription information of the users is changed.

10. A communication service system, comprising:
a service data management system, adapted to store service subscription information of users, and provide service subscription information associated with the users that are queried according to query requests; and
a presence server, PS, adapted to acquire a subscription request of a first user that carries an identification of a second user, query service subscription information associated with the second user from the service data management system and obtain the service subscription information associated with the second user that is returned by the service data management system, and generate a notification message carrying the service subscription information associated with the second user and send the notification message to the first user.
